# EUROPÄISCHE PATENTSCHRIFT

(11) **EP 2 335 040 B1**
(45) Veröffentlichungstag und Bekanntmachung des Hinweises auf die Patenterteilung: **12.06.2013**
(21) Anmeldenummer: 09748213.7
(22) Anmeldetag: 09.09.2009
(51) Int. Cl.: G01M 3/28, G01M 3/18, G01M 3/32

(54) **SENSOREINHEIT ZUR KONTROLLE VON ÜBERWACHUNGSRÄUMEN VON DOPPELWANDIGEN BEHÄLTERN ODER DOPPELWANDIGEN ROHRLEITUNGEN ODER DOPPELWANDIGEN BEHÄLTNISSEN**
SENSOR UNIT FOR CONTROLLING MONITORING CHAMBERS OF DOUBLE-WALLED CONTAINERS OR DOUBLE-WALLED PIPES OR DOUBLE-WALLED VESSELS
UNITÉ DE DÉTECTION SERVANT À VÉRIFIER DES ESPACES DE SURVEILLANCE DE CONTENANTS À DOUBLE PAROI OU CANALISATIONS À DOUBLE PAROI OU RÉCIPIENTS À DOUBLE PAROI

(30) Priorität: 14.09.2008 DE 102008047257
(43) Veröffentlichungstag der Anmeldung: 22.06.2011
(73) Patentinhaber: Sicherungsgerätebau GmbH, 57076 Siegen (DE)
(72) Erfinder: BERG, Jost-Henner, 57234 Wilnsdorf (DE); HÜCKING, Martin, 57080 Siegen (DE)
(74) Vertreter: Springorum, Harald
(86) Internationale Anmeldenummer: PCT/DE2009/001255
(87) Internationale Veröffentlichungsnummer: WO 2010/028631

(56) Entgegenhaltungen:
- EP-A- 0 606 166
- WO-A-2009/018971
- DE-A1- 1 525 779
- DE-C1- 3 934 057
- US-A- 4 876 530
- US-A1- 2004 182 136
- US-A1- 2005 247 112

## Beschreibung

Die vorliegende Erfindung betrifft Vorrichtungen und Systeme zur Kontrolle von Überwachungsräumen von doppelwandigen Behältern, doppelwandigen Rohrleitungen und auch doppelwandigen Behältnissen.

Die Lagerung von Lagergut, Flüssigkeiten oder Gas in Behältern oder der Transport von Lagergut durch Rohrleitungen birgt immer die Gefahr, dass dieses Lagergut aufgrund von Undichtigkeiten in dem Behältersystem oder in den Rohrleitungen austreten kann. Das Austreten des Lagergutes führt nun nicht nur zu Verlusten an dem Lagergut, sondern kann auch bei giftigen Behälterinhalten zu einer Kontamination der Umwelt führen. Um das Austreten des Lagergutes zu verhindern, werden nicht nur entsprechend sicher konstruierte Behälter verwendet, sondern zusätzlich werden präventive Maßnahmen getroffen, welche bei Auftreten eines Lecks sofort einen Alarm auslösen. Diese Leckanzeigesysteme haben sich für die Überwachung von Behältern und Rohren und Behältnissen bewährt. Sie werden in Tankstellen, Tanklagern und Heizöllagern erfolgreich eingesetzt.

Um möglichen Unfällen auf andere Art vorzubeugen sind manche Behälter oder Rohre oder Behältnisse doppelwandig ausgelegt, so dass bei einem möglichen Leck das Lagergut, beispielsweise ein Kraftstoff nicht direkt und ungehindert in die Umgebung strömen kann. Hieraus ergab sich eine weitere Möglichkeit eine Maßnahme zur Vermeidung einer Kontamination der Umwelt durch undichte Behälter und Rohre zu treffen. Der Raum zwischen den beiden Behälterwänden oder Rohrleitungen oder Behältnissen kann nämlich als Uberwachungsraum genutzt werden. In diesem Überwachungsraum wird nun ein bestimmter Unterdruck aufgebaut, welcher durch geeignete Drucksensoren gemessen wird. Weicht nun der aktuell gemessene Druck (Istwert) von dem gewünschten Druck (Sollwert) ab, so wird dies von dem Drucksensor gemessen. Die so erhaltene Information kann dann verarbeitet werden und zu einer Reaktion führen. Solche Verfahren und Vorrichtungen sind z.B. aus DE 3934057, DE 1525779 und US2005/0247112 bekannt.

Zusätzlich zu der Leckdetektion durch die Druckmessung wird derzeitig von der Firma Franklin Fueling auch noch eine Zeitmessung zum Auffinden eines möglichen Lecks verwendet.

Ein weiteres Produkt zur Leckdetektion bei doppelwandigen Behältern wird von der Firma Veeder-Root angeboten. Hier wird zusätzlich zur Druckmessung auch noch ein Schwimmer in den Überwachungsraum eingebracht, welcher das Auftreten einer Flüssigkeit in dem Überwachungsraum anzeigt.

Der Nachteil des Standes der Technik ist es allerdings, dass das vorliegende Messsystem nicht zwischen einer Undichtigkeit der inneren Behälterwand oder der äußeren Behälterwand beim Eintritt einer Flüssigkeit unterscheiden kann. Es kann sich hierbei nämlich um von außerhalb eindringendes Grundwasser oder um austretendes flüssiges Lagergut, beispielsweise Kraftstoffe oder Kraftstoffgemische handeln. Im zweiten Fall ist allerdings die Gefahr einer Kontamination der Umwelt gegeben. Der Schaden muss sofort behoben werden. Dies ist meist mit der zügigen Entleerung des Behälters verbunden. Ein solches Leck verlangt somit schnelle, personalintensive und damit auch sehr kostenintensive Handlungen. Ein weiterer großer Nachteil des Standes der Technik ist die Tatsache, dass keine Information darüber gegeben ist, welcher Stoff denn in den Überwachungsraum schon eingedrungen ist. Das Wissen über den eindringenden Stoff und der Behälter- oder Rohrwand, an welcher das Leck vorliegt, ist aber für die vorbereitenden Maßnahmen zur Beseitigung der Störung von enorm großer Relevanz. Dies betrifft nicht nur die notwendige Zeitplanung, sondern auch die Hilfsmittel, welche zur Wiederaufnahme des störungsfreien Betriebs notwendig sind.

Daher ist es Aufgabe der vorliegenden Erfindung eine Vorrichtung bereitzustellen, welche es ermöglicht den in den Überwachungsraum eindringenden Stoff zu identifizieren und hieraus die Wand, an welcher das Leck vorliegt, zu bestimmen.

Diese Aufgabe wird erfindungsgemäß gelöst durch ein System nach Anspruch 1. Zweckmäßige Ausführungsformen ergeben sich aus den Unteransprüchen.

Doppelwandige Behälter und doppelwandige Rohrleitungen und doppelwandige Behältnisse weisen grundsätzlich immer nur eine innere und eine äußere Wand auf. Das Grundprinzip der Erfindung ist aber auch ohne große Schwierigkeiten auf mehrwandige Behälter und Rohre übertragbar, es muß nur genau geklärt sein, welche Wände die Innenwand bzw. die Außenwand sein sollen. Weiterhin muß bekannt sein, in welchem Zwischenraum sich der Überwachungsraum befindet. Die Begriffe doppelwandig und mehrwandig können unter diesen Umständen synonym behandelt werden. Auch der Begriff des Behältnisses ist im Sinne dieser Anmeldung weit auszulegen, so umfasst er unter Anderem die Begriffe Schacht, Einführungen und auch Wannen. Diese Aufzählung ist nur beispielhaft und soll keineswegs abschließend verstanden werden.

Zum Auffinden eines Lecks mit der erfindungsgemäßen Vorrichtung wird in dem Zwischenraum zwischen den beiden Behälter- bzw. Rohr- bzw. Behältniswänden, also der Behälterinnen- bzw. Rohrinnen- bzw. Behältnisinnenwand, und der Behälter- bzw. Rohraußen- bzw. Behältnisaussenwand, welcher als Überwachungsraum dient, ein bestimmter vorgegebener Unterdruck erzeugt. Die erfindungsgemäße Vorrichtung wird nun so mit dem Überwachungsraum verbunden, dass der Drucksensor den im Überwachungsinneraum vorliegenden Druck messen kann. Der gemessene Druckwert (Istwert) wird nun mit dem vorgegebenen Druckwert (Drucksollwert) verglichen. Weichen diese beiden Werte (Drucksollwert und Druckistwert) voneinander ab, so weist der Überwachungsraum eine undichte Stelle auf. Bei einem vorliegenden Unterdruck wird bei einer undichten Stelle in den Behälter- bzw. Rohrwänden an diesen undichten Stellen entweder das Medium, welches sich innerhalb des Behälters bzw. des Rohres befindet, in den Überwachungsraum einströmen oder aber das Medium, das sich außerhalb des Behälters bzw, des Rohres bzw. des Behältnisses befindet, wird in den Überwachungsraum gesaugt. Dies fuhrt zu einer Veränderung des Innendruckes des Überwachungsraumes. Zusätzlich zur Druckmessung wird von der Vorrichtung mit Hilfe eines Mediensensors eine Materialkonstante K des Mediums im Überwachungsraum bestimmt. Materialkonstanten sind Konstanten, die einem Material bei konstanter Temperatur und konstantem Druck eigen sind. Sie werden von den physikalischen Eigenschaften des Materials bestimmt. Da unterschiedliche Medien oder unterschiedliche Materialien in den meisten Fällen voneinander abweichende physikalische Eigenschaften besitzen, weisen diese auch jeweils unterschiedliche Materialkonstanten auf. Somit können die Medien durch eine Bestimmung ihrer Materialkonstante K meist unterschieden werden. Dem Medium in dem doppelwandigen Behälter oder Rohr oder Behältnis, dem Medium in dem Überwachungsraum, sowie dem Medium außerhalb des Behälters oder Rohres oder Behältnisses wohnen einige unterschiedliche Materialkonstanten inne. Dies ist insbesondere dann der Fall, wenn sich Kraftstoffe oder Kraftstoffgemische in dem Behälter oder dem Rohr befinden. Bei Kraftstoffen oder Kraftstoffgemischen handelt es sich naturgemäß um entzündbare, flüchtige Kohlenwasserstoffe, die augenscheinlich gegenüber einem dünnen Luftgemisch, welches im Überwachungsraum vorliegt, oder gegenüber einer größtenteils aus Grundwasser bestehenden, nichtflüchtigen und schwer entzündlichen Lösung unterschiedliche Materialkonstanten besitzen. Unterschiedliche Dichtewerte, Leitfähigkeit und Polarität sowie die Entzündbarkeit sind hier besonders auffällig. Wird in diesem Fall die Materialkonstante K des Kraftstoffes in dem Überwachungsraum bestimmt, so ist die Behälter- oder die Rohr- oder Behältnisinnenwand undicht. Wird allerdings die Materialkonstante K einer wässrigen Mischung in dem Überwachungsraum bestimmt, so ist die Behälter- oder die Rohr- oder die Behältnisaussenwand undicht, da Grundwasser eindringt. Wird keine nennenswerte Veränderung bei der Bestimmung der Materialkonstante K gegenüber der Zeit vor der Druckänderung aufgefunden, so ist wahrscheinlich wiederum die Behälter- oder die Rohr- oder die Behältnisaussenwand undicht, da ein Luftgemisch eindringt. Somit ist es mit der erfindungsgemäßen Vorrichtung möglich den eindringenden Stoff zu identifizieren und diejenige der beiden Behälterwände zu bestimmen, welche undicht ist.

Der Drucksensor nach der vorliegenden Erfindung muß in der Lage sein unter den im Überwachungsraum herrschenden Bedingungen den Druck zu messen. Dies ist vielen erhältlichen Drucksensoren möglich. So können neben Passivdrucksensoren, Relativdrucksensoren, Absolutdrucksensoren auch Differenzdrucksensoren die Druckmessung durchführen. Als Sensormaterialien können Silizium, Quarze oder Metalle verwendet werden. Mit Hilfe von Halbleitertechnologien ist es inzwischen auch möglich, piezoelektrische Dünnschichten auf Messkörpern direkt zu applizieren. Hierbei handelt es sich meistens um Zinkoxid (ZnO) oder Aluminiumnitrid (AlN).

So können auch piezoresistive Drucksensoren verwendet werden. Sie enthalten meist einen in einer Membran eindiffundierten Dehnungsmessstreifen (DMS) und sind überwiegend aus Silizium hergestellt. Kommt es zu einer Krafteinwirkung ändert sich der Widerstand der Dehnungsmesswiderstände (wegen der Längenänderung der Dehnmessstreifen) und damit die gemessene Spannung. Diese Drucksensoren sind kostengünstig herzustellen und weisen eine vergleichsweise hohe Empfindlichkeit auf. Allerdings zeigen die zur Druckmessung eingesetzten Materialien eine sehr starke Temperaturabhängigkeit. Sensoren auf Siliziumbasis haben daher praktisch immer zusätzlich Temperatursensoren eingebaut mit deren Hilfe die Messwertinformation korrigiert werden kann. Weiterhin können piezoelektrische Drucksensoren Verwendung finden. Bei einem piezoelektrischen Sensor wird mittels Druck durch Ladungstrennung eine elektrische Spannung in einem Kristall erzeugt. Dies nennt man den piezoelektrischen Effekt. Durch Druck verschieben sich im Inneren des Kristalls Ionen, wodurch sich die Ladung proportional zur Kraft verändert. Allerdings messen piezoelektrische Sensoren grundsätzlich nur Kräfte. Soll der Sensor in der Druckmeßtechnik verwendet werden, muss erst über eine Membran der Druck proportional in eine Kraft umgewandelt werden.

Ebenfalls können kapazitive Drucksensoren, welche einen in einem Siliziumchip eindiffundierten Kondensator enthalten, in die erfindungsgemäße Vorrichtung eingebaut werden. Über eine Membran wird bei Druckbeaufschlagung der Abstand der Kondensatorplatten, und dadurch die Kapazität des Kondensators, verändert. Meistens sind die Kondensatoren Teil eines internen Verstärkers, dessen Verstärkungsfaktor von der Kapazität des Kondensators abhängig ist.

Alle Drucksensoren wandeln aber schließendlich die physikalische Größe Druck in eine zum Druck proportionale elektrische Ausgangsgröße um.

Allgemein, aber nicht einschränkend zu verstehen gilt folgendes:

Im Überwachungsraum herrscht ein definierter Unterdruck, der sogenannte Betriebsunterdruck. Dieser ist naturgemäß größer als der Druck in einem Vakuum. Ein Vakuum kann naturgemäß, aus Mangel an Materie keinen Druck aufbauen Der Druckwert im Zustand des Unterdruckes (Betriebsunterdruck) ist also höher als der des Vakuums. Kann der Unterdruck (Betriebsunterdruck) in dem Überwachungsraum nicht gehalten werden, da Medium einströmt, so ändert sich der Druck der aktuell im Überwachungsraum vorliegt in Richtung zu dem Alarmdruck. Der Alarmdruck gibt einen Druckwert an, bei dem Alarmsignale ausgegeben werden. Der Alarmdruckwert ist sowohl höher als der Druckwert im Vakuum und auch höher als der Druckwert bei dem definierten Unterdruck im Überwachungsraum dem Betriebsunterdruck.

Der Mediensensor wird praktischerweise so gewählt, dass er eine Materialkonstante bestimmen kann, welche bei den infrage kommenden Medien unterschiedlich ist.

In einer anderen Ausführungsform der Erfindung weist der Mediensensor mindestens zwei Elektroden auf und die Vorrichtung bestimmt mit Hilfe des Mediensensors eine elektrisch meßbare Materialkonstante K des Mediums im Überwachungsinnenraum.

Vorteil dieser Ausführungsform ist die einfache und leicht durchzuführende Herstellung dieser Vorrichtung. Elektroden sind in vielen Größen und Formen auf ihre Funktionstüchtigkeit und Leistungsfähigkeit untersucht worden. So gehören Planarelektroden, Ringelektroden und Stabelektroden gefertigt aus allen möglichen Metallsorten und sogar aus Graphit, zu gängigen, erhältlichen Artikeln. Mit den elektrisch messbaren Materialkonstanten der spezifischen Leitfähigkeit, dem spezifischem Widerstand sind gleich mehrere Möglichkeiten zur Unterscheidung der Medien mit Hilfe der jeweiligen Materialkonstante K gegeben. Die Messung der spezifischen Leitfähigkeit ist zur Unterscheidung eines polaren Mediums, insbesondere eine wässrige Lösung, von einem unpolaren Medium, insbesondere einem Kohlenwasserstoffgemisch geeignet.

In einer besonders bevorzugten Ausführungsform nach der vorliegenden Erfindung handelt es sich bei der elektrischen Materialkonstante um die Dielektrizitätskonstante ε. Die Dielektrizitätskonstante ε, insbesondere die relative Dielektrizitätskonstante ε(r), ist eine für jedes Medium charakteristische Materialkonstante und bezeichnet das Verhältnis, um wie viel die Kapazität eines mit diesem Medium gefüllten Kondensator zu einem mit Luft gefüllten Kondensator ansteigt. Sie ist eine dimensionslose Zahl und hat für Luft definitionsgemäß den Wert 1, einen ähnlich Wert weist sie für das Vakuum auf. Alle Flüssigkeiten haben eine relative Dielektrizitätskonstante ε(r), die einen Wert größer als 1 hat. Wasser besitzt den Wert 81, Dieselkraftstoff einen Wert von 2,1 und ein Öl-Wasserschlammgemisch weist eine relative Dielektrizitätskonstante ε(r) von 32 auf (Alle Werte beziehen sich auf eine Messung bei 100 KHz). Die relative Dielektrizitätskonstanten ε(r) von Wasser und Kraftstoff weichen demnach stark voneinander ab und somit sind diese beiden Medien mit Hilfe ihrer relative Dielektrizitätskonstanten ε(r) leicht zu unterscheiden.

In einer weiteren ganz besonderen Ausführungsform der Vorrichtung zur Kontrolle von Überwachungsräumen wird die relative Dielektrizitätskonstante ε, insbesondere die relative Dielektrizitätskonstante ε(r), mit Hilfe einer Kapazitätsmessung bestimmt, wobei diese Messung vorzugsweise mit einer Brückenschaltung, insbesondere mit einer Wheatstone-Brücke oder einer Schering-Brücke durchgeführt wird.

In einer ganz besonders bevorzugten Ausführungsform der vorliegenden Erfindung erfolgt die die Kapazitätsmessung vermittels einer Clapp-Oszillator Methode, vorzugsweise einer modifizierten Clapp-Oszillator Methode. Die Clapp-Oszillator Methode verwendet eine Transistorschaltung, die mit sehr geringer Spannung auskommt. Gegenüber dem früher erfundenen Meissner-Oszillator oder Hartley-Oszillator benötigen diese Schaltungen nur eine Spule ohne Anzapfung. Der Schwingkreiskondensator C ist aufgeteilt in die drei Kondensatoren C1, C2 und C3. Die Hochfrequenz-Wechselspannung am oberen Anschluss von C2 ist doppelt so groß wie am oberen Anschluss von C3. Mit der Spannungsverstärkung des Transistors von 0.99 und dem Spannungsteiler R3, R4 ergibt sich eine Gesamtspannungsverstärkung von etwas über 1, wie für einen Oszillator nötig. Die Widerstände R1 und R2 bestimmen den Arbeitspunkt des Transistors. Über einen vierten Kondensator C4 wird das Ausgangssignal des Oszillators ausgekoppelt. Vorteil dieser Ausführungsform ist die hohe Empfindlichkeit bei der Messung der Dielektrizitätskonstante ε. Sie kann sogar durch eine Vergußmaterialschicht hindurch bestimmt werden. Die Ummantelung bestimmter elektrischer Komponenten mit einer nicht leitfähigen Vergußmasse kann zur Erhöhung der Sicherheit dienen. Dies ist auch hier wichtig, da auch Kraftstoffe in den Behältern, Rohren und Behältnissen gelagert und gefördert werden.

In einer anderen Ausführungsform der vorliegenden Erfindung weist diese mindestens einen Optokoppler auf, der der jeweiligen Potentialtrennung der Sensoren zu den übrigen elektrischen Bauteilen dient. Ein Optokoppler ist ein opto-elektronisches Verbund-Bauelement, welches aus einem meist Infrarotstrahlung emittierenden und einem die Strahlung empfangenden Bauelement besteht. Beide sind lichtgeschützt und können in einem gemeinsamen Gehäuse untergebracht sein. Zweck von Optokopplern ist die Übertragung eines elektrischen Signals bei gleichzeitiger galvanischer Trennung (elektrischer Isolierung) zwischen Ein- und Ausgangsstromkreis. Mit Hilfe des Optokopplers werden mögliche Ein- und Ausgangssignale, insbesondere die Messwerte des Drucksensors und des Mediensensors in Signale umgewandelt und können dann an eine Empfangseinheit übermittelt werden.

In einer ganz besonderen Ausführungsform der vorliegenden Erfindung wird der Optokoppler eigensicher ausgestaltet, dies verhindert die Beeinflussung des Optokopplers durch Fremdspannung und ist zugleich auch ein Explosionsschutz. Die Eigensicherheit des Optokopplers verlangt allerdings eine eigene Kabelzuführung und die Trennung von anderen Stromkreisen. Die Maßnahmen zum Schutz vor Explosionen und Detonationen sind bei explosivem Lagergut, insbesondere Kraftstoffen und Kraftstoffmischungen, in vielen Ländern gesetzlich geregelt.

In einer weiteren Ausführungsform der Erfindung sind der Drucksensor und der Mediensensor in einer Baueinheit integriert. Dies birgt Vorteile bei der Herstellung und dem Einbau der Vorrichtung in die Anlagen, insbesondere Tankanlagen.

In einer anderen Ausführungsform der Erfindung weist die Baueinheit ein Gehäuse und mindestens ein Ventil, vorzugsweise ein Magnetventil, auf, wobei das Ventil den Zu- bzw. Abfluss des Mediums zu oder von dem Überwachungsraum steuert. Das Ventil, vorzugsweise das Magnetventil lässt im geöffneten Zustand das Medium in die Baueinheit strömen. Im geschlossenen Zustand kann das Medium nicht in die Baueinheit strömen. Das Magnetventil wird geöffnet, wenn der von dem Drucksensor gemessene Druck nicht dem Betriebsunterdruck entspricht. Nach dem Öffnen des Magnetventils kann sich die Druckmessung ändern, nämlich dann wenn ein Druckausgleich erfolgt ist. Liegt in dem Überwachungsraum der Betriebsunterdruck vor, wird vom dem Drucksensor nun auch wieder der Betriebsunterdruck gemessen. Liegt im Überwachungsraum ein anderer Druck vor, wird dieser gemessen. Gelangt von dem Überwachungsraum Flüssigkeit in die Vorrichtung zur Kontrolle von Überwachungsräumen schließt sich das Magnetventil sofort. Die Ummantelung der Baueinheit in ein Gehäuse erhöht die Stabilität der Vorrichtung und verlängert damit die Lebensdauer der Vorrichtung.

Eine weitere Ausführungsform der vorliegen- den Erfindung ist dadurch gekennzeichnet, dass - mit Ausnahme der Elektrodenteile des Mediensensors, die mit dem Medium in Kontakt stehen und der Meßfühler des Drucksensors - die elektrischen Bauteile der Baueinheit mit einer elektrisch nicht leitfähigen Vergußmasse umgeben sind. Die Vergußmasse darf natürlich nicht die Funktion der erfindungsgemäßen Vorrichtung beeinträchtigen. Sollten beispielsweise Elektrodenteile mit dem Medium in Berührung kommen, so müssen diese aus der Vergußmasse herausragen. In mindestens einer der hier vorliegenden Ausführungsform der Erfindung, nämlich der Messung der Dielektrizitätskonstanten mit Hilfe der Clapp-Oszillator-Methode ist dies nicht notwendig. Auch verhindert die Ummantelung mit einer Vergußmasse die Abgabe von elektrischen Ladungen, Wärme und anderen Einflüssen, die das Bauteil auf seine Umgebung und somit auch auf das im Schadensfall eindringende Medium, insbesondere Kraftstoff abgeben kann. Die Ausführungsform dient somit ebenfalls zum Schutz vor Explosionen.

In einer anderen Ausführungsform nach der vorliegenden Erfindung weist die Baueinheit in etwa eine zylindrische Form auf. Vorteil hiervon ist die kostengünstige und leicht handhabbare Fertigung und eine Erleichterung bei der Montage des Bauteils.

In einer ganz bevorzugten Ausführungsform der vorliegenden Erfindung weist die Baueinheit einen Adapter, vorzugsweise ein Kupplungsstück auf, über welchen das Medium zugeführt wird und der den Anschluß von Verbindungsmitteln, vorzugsweise Schläuchen oder Rohren, zur pneumatischen Ankopplung an eine weitere Baueinheit oder den Überwachungsraum ermöglicht. Mit Hilfe dieser Ausführungsform der erfindungsgemäßen Vorrichtung ist es nun leicht möglich die Anzahl der Bauteile, welche zur Kontrolle des Überwachungsraumes verwendet werden, zu erhöhen. Es können weitere Baueinheiten, welche gleiche oder andere Sensoren verwenden, miteinander gekoppelt werden. Das Kupplungsstück zwischen den Vorrichtungen ist nun so geformt, dass das Innere ausreichend Durchlass für das Medium sicherstellt und es in die Vorrichtung zur Kontrolle von Überwachungsräumen in ausreichender Tiefe hineinragt, so dass der sich ergebende Spalt zwischen dem Kupplungsstück und dem Gehäuse der Vorrichtung in Spaltlänge und in Spaltweite den jeweiligen Anforderungen des Explosionsschutzes zur Zonentrennung zwischen dem Inneren der Baueinheit und der Umgebung genügt. Weiterhin müssen die Kupplungsstücke in der Lage sein die Bauteile untereinander so zu verbinden, dass der vorhandene Unterdruck gehalten wird, also die Aneinanderreihung der Bauteile nicht zu einer neuen Undichtigkeitsquelle wird. Ansonsten sind die von dem Drucksensor gelieferten Druckwerte unbrauchbar, da sie nicht eine Undichtigkeit der Behälterwände anzeigen. Bajonett- und Dreh- und Schraubverschlüsse bieten sich hier als Kupplungsstück an. Diese Ausführungsform der Vorrichtung zur Kontrolle vom Überwachungsräumen ist leicht zu handhaben und zu montieren.

Die Vorrichtung zur Kontrolle von Überwachungsräumen von doppelwandigen Behältern oder doppelwandigen Rohrleitungen und doppelwandigen Behältnissen wird natürlich in einem System verwendet, welches zusätzlich zur der Vorrichtung mindestens einen doppelwandigen Behälter und/oder mindestens ein doppelwandiges Rohr und/oder mindestens ein doppelwandiges Behältnis, mindestens eine Vakuumquelle, die in dem Überwachungsraum einen Unterdruck erzeugt, sowie mindestens eine Alarmvorrichtung aufweist, wobei die Vorrichtung zur Kontrolle von Überwachungsräumen über ein Verbindungsmittel mit dem Überwachungsraum des doppelwandigen Behälters oder doppelwandigen Rohres oder des doppelwandigen Behältnisses verbunden ist, und die Vorrichtung zur Kontrolle von Überwachungsräumen weiterhin mit mindestens einer Signalverarbeitungseinheit so verbunden ist, dass diese die von ihrem Drucksensor und vom Mediensensor erzeugten Signale empfangen und verarbeiten kann, wobei die Signalverarbeitungseinheit so eingerichtet ist, dass sie die Signale mit vorgegebenen Werten, insbesondere den Drucksignalwert mit einem Drucksollwert und den Materialkonstantensignalwert des Mediensensors mit einem Materialkonstantensollwert vergleicht und daraus neue Steuerdaten und Steuerbefehle, insbesondere für die Vakuumquelle und die Alarmvorrichtung, erzeugt, und die Vakuumquelle und die Alarmvorrichtung jeweils so eingerichtet sind, dass sie die für sie bestimmten Steuerbefehle der Signalverarbeitungseinheit ausführen können. Die Signalverarbeitungseinheiten können sogar schon in dem jeweiligen Sensor vorliegen, also in der Vorrichtung zur Kontrolle von Überwachungsräumen, und diesen in einen intelligenten Sensor ändern. Das Prinzip des Datenvergleichs von Istwert mit Sollwert bleibt aber erhalten.

Ein solches System ist in der Lage die Lagerung von Kraftstoffen zu überwachen ohne dass befürchtet werden muss, dass der Kraftstoff unbemerkt aus dem doppelwandigen Tank oder den doppelwandigen Rohren oder den doppelwandigen Behältnissen in die Umgebung fließen kann. Die in der erfindungsgemäßen Vorrichtung gewonnenen Messwerte werden, nach Bearbeitung in Steuerdaten und Steuerbefehle umgewandelt, die alle möglichen weiteren steuerbaren Bauteile ansprechen und steuern können. Diese Bauteile können nun auch ausserhalb des eigentlichen erfinderischen Systems liegen. Wird Kraftstoff in einem doppelwandigen Behälter gelagert, so kann er durch ein doppelwandiges Rohr gefördert werden. Sowohl der doppelwandige Behälter als auch das doppelwandiges Rohr können ein System zur Kontrolle von Überwachungsräumen aufweisen. Die durch die Systeme erzeugten Steuersignale können nun auch von externen Vorrichtungen verwendet werden, so dass die Betriebssicherheit einer gesamten Förderanlage verbessert werden kann. So können viele Prozesse automatisiert werden, so dass etwaige Fehler durch menschliches Versagen hier nicht eintreten können. Unterirdische Tankanlagen entziehen sich weitgehend Kontrollen und Inspektionen durch Personal direkt an dem System. In diesem Fall muss zur Gewährleistung der Sicherheit ein großer Teil der Schutz- und Inspektionsaufgaben durch eine Steuerungseinheit übernommen werden.

Die Vakuumquelle, im einfachsten Fall eine Pumpe, erzeugt den Unterdruck in dem Überwachungsraum. Sie soll vorzugsweise ansteuerbar ausgestaltet sein, damit sie im Bedarfsfall durch ein Signal gestartet, ausgeschaltet oder in ihrer Leistung beeinflusst werden kann. Die Alarmvorrichtung dient zur Alarmierung bei kritischen Systemzuständen, wobei die Alarmierung durch optische, akustische oder sonstige Signale erfolgen kann. Die rote Alarmlampen sind allgemein bekannt, auch die lauten Sirenengeräusche als Alarmsignal sind gegenwärtig. Diskretere Alarme sind Benachrichtigungen über angeschlossene Netzwerke oder per Funk. Sie sind ebenfalls möglich.

In einer weiteren Ausführungsform des erfindungsgemäßen Systems werden mehrere Bauteile und erfindungsgemäße Vorrichtungen über ihre Verbindungsmittel untereinander und mit dem/den Überwachungsraum/räumen verbunden, wobei als Verbindungsmittel ein Schlauch und/oder ein Rohr dient. Der Vorteil dieses Systems ist ebenfalls die erhöhte Ausfallsicherheit durch Redundanz durch gleichwirkende, aber anders ausgestaltete erfindungsgemäße Vorrichtungen. Hier gilt allerdings auch, dass die Verbindungsmittel den Unterdruck halten können, und dass eine übliche Schwachstelle, nämlich die Enden der Verbindungsstücke, so mit anderen Verbindungsstücken oder dem Überwachungsraum verbunden sind, dass die Änderung des Unterdrucks in dem Uberwachungsraum durch Undichtigkeiten an jenen Enden vermieden werden.

In einer Ausführungsform des erfindungsgemäßen Systems ist die Vakuumquelle ein Vakuum-Puffer-Gefäß, also ein Gefäß, welches nach seiner Evakuicrung den Unterdruck beibehalten kann. Dieses Vakuum-Puffer-Gefäß kann einerseits ganz oder zeitweise eine Pumpe als Vakuumquelle ersetzen. Sie wird vorzugsweise bei jedem Lauf der Pumpe oder auch einer Tauchpumpe erneut evakuiert, um wieder volle Funktionstüchtigkeit zu erlangen. Zur Evakuierung des Vakuum-Puffer-Gefäßes kann jede Pumpe, also Pumpen, die nicht zum System gehören, verwendet werden.

In einer weiteren Ausführungsform des erfindungsgemäßen Systems weist das System ein Speicher- und Monitormodul auf, welches so eingerichtet ist, dass es mindestens die erzeugten Signalwerte des Drucksensors und/oder des Mediensensors und/oder den Drucksollwert und/oder den Materialkonstantensollwert und/oder die von der Signalverarbeitungseinheit erzeugten Steuerdaten jeweils über die Zeit speichert. Der Vorteil dieser Ausführungsform liegt in der Abrufbarkeit der Informationen über die aktuellen und vergangenen Betriebszustände der Anlage. So können etwaige Probleme bei schleichenden Undichtigkeiten besser verfolgt werden, um dann möglicherweise ohne großen Aufwand beseitigt zu werden. Die schleichenden Undichtigkeit erkennt man an einer langsamen Zunahme der Änderung der Druckänderung. Des weiteren ist es möglich durch die Differenz der gemessenen Druckwerte (Drucksollwert - Druckistwert) die Größe bzw. das Ausmaß der Undichtigkeit abzuschätzen.

Das erfindungsgemäße System kann zur Lagerung explosiver und leicht entzündlicher Medien, insbesondere von Kraftstoffen und auch Kraftstoffmischungen oder Dieselkraftstoffen, dienen, aus diesem Grund ist es vorteilhaft es explosionssicher und/oder detonationssicher auszugestalten, vorzugsweise indem die Enden der jeweiligen Verbindungsmittel zwischen Überwachungsraum und/oder der Vorrichtung jeweils eigenständig explosions- und/oder detonationssicher ausgeführt sind. Diese Explosionssicherung kann einerseits durch eine Verstärkung mittels feuerfester Isolierungen erfolgen, anderseits können aber auch alle anderen Sicherheitsmaßnahmen zum Explosionsschutz verwendet werden, so beispielweise Trennung aller Kabelzugänge, getrennte Stromversorgungen für jeden einzelnen Verbraucher im System oder anderes heutzutage Bekanntes mehr.

In einer ganz besonders bevorzugten Ausführungsform des erfindungsgemäßen Systems ist dieses dadurch gekennzeichnet, dass die Signalverarbeitungseinheit so eingerichtet ist, dass
- für den Fall, dass das Drucksignal vom Drucksensor höher als der Drucksollwert ist (er kann aber in Absolutwerten noch niedriger als der Alarmdruckwert sein) und die vom Mediensensor gemessene Materialkonstante einem Materialkonstantensollwert entspricht, der demjenigen Materialkonstantenwert des Mediums im Behälter oder Rohres oder Behältnisses gleicht,
   erzeugt die Signalverarbeitungseinheit einen Steuerbefehl für die Alarmvorrichtung der den Alarm "PRODUKTLECK" auslöst, sowie einen Steuerbefehl zur Ansteuerung externer Vorrichtungen; und/oder
- für den Fall, dass das Drucksignal vom Drucksensor höher als der Drucksollwert ist (er kann aber in Absolutwerten noch niedriger als der Alarmdruckwert sein) und die vom Mediensensor gemessene Materialkonstante einem Materialkonstantensollwert entspricht, der demjenigen Materialkonstantenwert einer wäßrigen Mischung gleicht,
   erzeugt die Signalverarbeitungseinheit Steuerbefehl für die Alarmvorrichtung der den Alarm "AUSSENLECK, FLÜSSIGKEIT" auslöst, und/oder
   für den Fall, dass das Drucksignal vom Drucksensor höher als der Drucksollwert ist (er ist aber in Absolutwerten höher als der Alarmdruckwert) und die vom Mediensensor gemessene Materialkonstante einem Materialkonstantensollwert entspricht, der weder demjenigen Materialkonstantenwert des Mediums im Behälter oder Rohres oder Behältnisses noch dem einer wäßrigen Mischung gleicht,
   erzeugt die Signalverarbeitungseinheit einen Steuerbefehl für die Alarmvorrichtung der den Alarm "LUFTLECK" auslöst.

Für den einfachsten Fall, dass alle gemessene Werte in einem als normal definierten Bereich vorliegen, gilt, dass keine Alarmmeldungen ausgelöst werden. Es werden nur die Standartmeldungen und möglicherweise die Routineberichte von der Signalverarbeitungseinheit generiert und dann ausgegeben.

In dem Fall, dass die Anlage gestartet wird und dann nach angemessener Zeit kein Betriebsunterdruck aufgebaut werden kann, wird der Alarm "LUFTLECK" ausgelöst. Grund für den fehlenden Unterdruckaufbau im Überwachungsraum kann ein Versagen der Vakuumquelle und/oder eine wahrscheinlich nicht geringe Undichtigkeit an einer Behälterwand und/oder einem Behälterrohr sein.

Wird vom Mediensensor eine Materialkonstante gemessen, welche demjenigen Materialkonstantenwert des Mediums im Behälter oder Rohr gleicht, so ist das Medium in den Überwachungsraum gedrungen. Die innere Behälterwand und/oder die innere Rohrwand ist undicht. Die gesamte Anlage, also alle durch die Steuerdaten und Steuerbefehle ansteuerbaren Bauteile des Systems, etwa die Vakuumquelle, das Ventil, vorzugsweise das Magnetventil, wenn diese ansteuerbar ausgelegt sind, erhalten die Steuerdaten und Steuerbefehle, die die Anlage so schnell wie möglich, aber ohne Schaden anhält. In diesem Fall lautet der Alarm "PRODUKTLECK". Dieser fordert schnellstmöglichste Unterstützung zur Beseitigung des Schadens an. Weiterhin können durch die Steuerdaten auch direkt zum System gehörige ansteuerbare Komponenten angesteuert werden und dann auch sogar ihren Betrieb stoppen. So kann z. Bsp. eine externe Förderpumpe in einem doppelwandigen Förderrohr in ihrem Betrieb unterbrochen werden, wenn das System zur Kontrolle von Überwachungsräumen in dem doppelwandigen Förderrohr den Alarm "PRODUKTLECK" ausgegeben hat.

Ist das Drucksignal vom Drucksensor höher als der Drucksollwert und entspricht zusätzlich die vom Mediensensor gemessene Materialkonstante einem Materialkonstantensollwert, der demjenigen Materialkonstantenwert einer wäßrigen Mischung gleicht, so ist Grundwasser in den Überwachungsraum gelangt. Die Vakuumquelle kann versuchen den Unterdruck aufrechtzuerhalten, dies kann durchaus bei einem geringen Schaden an der Wand möglich sein, es wird aber von der Signalverarbeitungseinheit ein Steuerbefehl für die Alarmvorrichtung erzeugt, der den Alarm "AUSSENLECK, FLÜSSIGKEIT" auslöst. Dieser bedeutet, dass die Vorbereitungen zur Reparatur des Lecks getroffen werden. Da der Betrieb und die Umwelt aber nicht unmittelbar gefährdet sind, läuft die Anlage weiter.

Ist das Drucksignal vom Drucksensor höher als der Drucksollwert und entspricht die vom Mediensensor gemessene Materialkonstante einem Materialkonstantensollwert, der weder demjenigen Materialkonstantenwert des Mediums im Behälter oder Rohr oder Behältnisses, noch dem einer wäßrigen Mischung gleicht, so liegt ein Luftleck vor. Auch dieser Schadensfall muss nicht zwingend zu dem Anhalten der gesamten Anlage führen, es wird aber durch die Signalverarbeitungseinheit ein Steuerbefehl für die Alarmvorrichtung erzeugt, der den Alarm "LUFTLECK" auslöst

Durch diese Auswertungen der ausgegebenen Informationen kann eine Beurteilung der Sachlage bei einer Druckveränderung in dem Überwachungsraum abgegeben werden, welche es ermöglicht den Zeit-, Aktions- und Handlungsablauf bei der Beseitigung der Undichtigkeiten, also im Schadensfall optimal zu wählen.

Diese Abläufe können auch drastische Aktionen fordern, nämlich ist es durchaus möglich zusätzlich in der erfindungsgemäßen Vorrichtung die Sensoren so einzurichten, dass bei genau definieren Werten die Anlage sofort gestoppt, also ohne vorherige Verarbeitung der Werte durch die Signalverarbeitungseinheit.

Die Verwendung des erfindungsgemäßen Systems kann auch zur Lagerung von Kraftstoffen dienen.

Im folgenden werden nicht einschränkend zu verstehende Ausführungsbeispiele anhand der Zeichnung besprochen. In dieser zeigt:
Fig. 1 eine schematische Darstellung des erfindungsgemäßen Systems,
Fig. 2 eine schematische Darstellung der Vorrichtung zur Kontrolle von Überwachungsräumen von doppelwandigen Behältern oder doppelwandigen Rohrleitungen oder doppelwandigen Behältnissen,
Fig. 3 eine schematische Darstellung des erfindungsgemäßen Systems zur Verwendung von Aufnahme, Lagerung und Abgabe von Kraftstoffen.

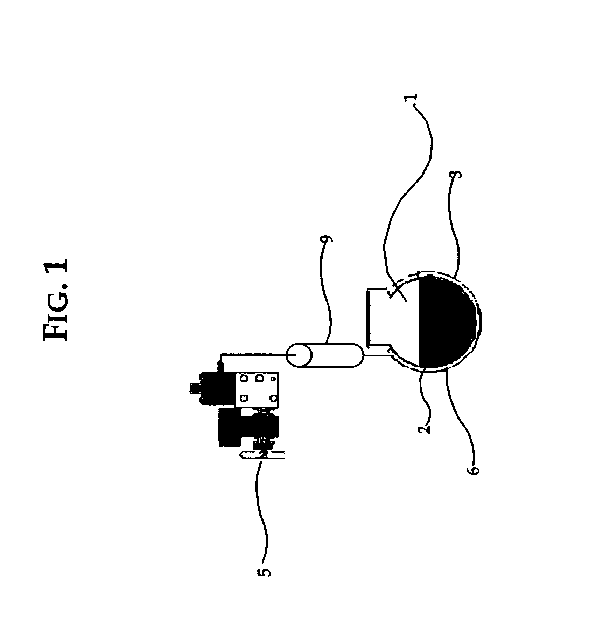

Fig. **1** zeigt schematisch eine Darstellung des erfindungsgemäßen Systems zur Kontrolle von Überwachungsräumen von doppelwandigen Behältern **1** oder doppelwandigen Rohren oder doppelwandigen Behältnissen, für eine Anlage zur Bewahrung von Kraftstoff. Diese werden in einem doppelwandigen Behälter **1,** gelagert. Man kann deutlich die innere Behälterwand 2 und die äußere Behälterwand **3** erkennen. Auf der linken Seite des Behälters (aus der Sicht des Betrachters) befindet die Pumpe 5. Diese Pumpe 5 erzeugt in dem Raum zwischen der inneren Behälterwand **2** und die äußeren Behälterwand **3,** also dem Überwachungsraum **6** einen Unterdruck. Die Pumpe **5** ist mit dem Überwachungsraum **6** des Behälters durch als pneumatische Verbindungsmittel ausgelegte Rohrverbindung verbunden. In dieser Rohrverbindung befindet sich die erfindungsgemäße Vorrichtung zur Kontrolle von Überwachungsräumen **9**. Das Medium wird also von der Pumpe **5** aus dem Überwachungsraum **6** durch die Vorrichtung zur Kontrolle von Überwachungsräumen **9** gesaugt. Wird Flüssigkeit angesaugt und gelangt in die Vorrichtung zur Kontrolle von Überwachungsräumen **9** kann diese jedoch nicht in die Pumpe **5** gelangen, da nach Detektion der Flüssigkeit das Magnetventil sofort geschlossen wird. Unter der Vorrichtung zur Kontrolle von Überwachungsräumen **9** kann noch eine vorgeschaltete Hilfseinrichtung, vorzugsweise angeschlossen über einen Dreiwegehahn angebracht sein. Diese kann mit einem Manometer verbunden sein oder auch nur zur Belüftung nach Eindringen von Flüssigkeit in die Vorrichtung zur Kontrolle von Überwachungsräumen **9** dienen. Die Signalverarbeitungseinheit, die so eingerichtet ist, dass sie die Signale mit vorgegebenen Werten, insbesondere den Drucksignalwert mit einem Drucksollwert und den Materialkonstantensignalwert des Mediensensors mit einem Materialkonstantensollwert vergleicht und daraus neue Steuerdaten und Steuerbefehle, insbesondere für die Vakuumquelle und die Alarmvorrichtung, erzeugt, ist in dieser Figur nicht zu sehen. Sie kann sich auch in geteilter Form vorliegen, nämlich jeweils in den Sensoren und auch ausserhalb der Baueinheit.

In dem Überwachungsraum **6** des doppelwandigen Behälters **1** wird nun mit Hilfe der Pumpe **5** ein Unterdruck aufgebaut und aufrechterhalten. Der Wert des Überwachungsrauminnendruckes (Druckistwert) wird in der erfindungsgemäßen Vorrichtung zur Kontrolle von Überwachungsräumen **9** durch den Drucksensor **10** gemessen und mit dem vorbestimmten Druck (Drucksollwert, also dem Betriebsunterdruck, welcher durchaus in einem Bereich mit einem oberen und einem unter Betriebsdrucksollwert definiert sein kann) verglichen. Sind alle gewonnenen Messwerte und die mit Hilfe der Signalverarbeitungseinheit daraus erstellten Daten im **"normalen"** Bereich, wird ein möglicher Befehl **"weiter Beobachten"** vorgeschlagen, der entweder manuell oder automatisch durch die Steuer- und Regelvorrichtungen der Anlage umgesetzt wird. Die Messwerte und Daten sind genau dann im normalen Bereich, wenn die Druckabweichung zwischen Solldruck und dem Istdruck gar nicht vorhanden oder nur gering ist, also der Alarmdruck nicht erreicht wird. Der Alarmdruck muß mindestens 30 mbar höher sein, als der Druck, der sich aus dem geodätischen Höhenunterschied zwischen der Vorrichtung zur Kontrolle von Überwachungsräumen **9** und dem tiefsten Punkt des doppelwandigen Behälters **1** ergibt. Wird aber nach dem Start der Anlage innerhalb einer angemessenen Zeit nicht der gewünschte Betriebsunterdruck erreicht, also der Alarmdruck wird (als Absolut gesehen) nicht unterschritten, so wird der Alarm "LUFTLECK" ausgelöst. Die Anzahl der Fehlermöglichkeiten ist zu groß und das Risiko nicht zu tragen. So kann ein Defekt der Pumpe **5** schon für das Fehlen des Unterdrucks verantwortlich sein. Jedoch kann genauso die äußere Behälterwand 3 oder innere Behälterwand 2 undicht sein.

Im Falle eines Luft-Lecks wird Luft in den Uberwachungsraum **6** des doppelwandigen Behälters **1** gesaugt. Der gemessene Druck (Druckistwert) wird in der Folge von dem Betriebsunterdruck abweichen. Die Pumpe **5,** vorzugsweise eine Vakuumpumpe, wird eingeschaltet, um den Betriebsunterdruck wieder herzustellen. Sollte dies nicht möglich sein, wegen eines größeren Luftlecks, durch das mehr Luft in den Überwachungsraum **6** eindringt als die Pumpe **5** hinaus fördern kann, so wird nach einer Zeit der als Alarmdruck definierte Druckwert überschritten. Zeigt der Mediensensorsensor keine Änderung des Kapazitätswertes an, so ist keine Flüssigkeit im Überwachungsraum **6** vorhanden. Die Signalverarbeitungseinheit erzeugt einen Steuerbefehl für die Alarmvorrichtung, der den Alarm "LUFTLECK" auslöst. Dieser Alarm führt zu keiner akuten Anlagenstörung, insbesondere nicht zwingend zur Abschaltung der externen ansteuerbaren Vorrichtungen, so etwa die Förderpumpe, die zur Förderung des Produktes (bspw. Kraftstoff) benötigt wird. Da der gewünschte Unterdruck zwar nicht aufgebaut werden kann aber es immer noch ein genügender Unterdruck vorliegt, droht somit keine Gefahr für die Umwelt. Der Schaden sollte in angemessener Zeit behoben werden.

Im Falle eines Flüssigkeit-Lecks wird entweder Kraftstoff oder Grundwasser in den Überwachungsraum **6** gesaugt. Auch in diesem Fall wird die Pumpe **5** eingeschaltet, um den Unterdruck aufrechtzuerhalten. Hier wird aber nun durch den Mediensensor **13** eine Flüssigkeit in dem Überwachungsraum **6** aufgefunden. Aufgrund der unterschiedlichen Dielektrizitätskonstanten ε des Kraftstoffes und des Wassers, kann zwischen dem Kraftstoff und dem Grundwasser unterschieden werden. Im Laufe der Zeit wird entweder der Kraftstoff oder das Grundwasser in die Verbindung zwischen Behälter und Pumpe **5** gesaugt. Jetzt müssen zwei unterschiedliche Fälle betrachtet werden.
a) Wird durch die erfindungsgemäße Vorrichtung zur Kontrolle von Überwachungsräumen **9** der kapazitive Wert des Wassers gemessen, ist es sicher, dass die äußere Behälterwand **3** das Leck aufweist. Damit kann auch eine Kontamination der Umwelt durch freiwerdendes Lagergut ausgeschlossen werden. Es wird der Alarm "AUSSENLECK, FLÜSSIGKEIT" durch die Alarmvorrichtung herausgegeben. Die gesamte Anlage, beispielsweise eine Anlage zur Förderung von Kraftstoff aus einem doppelwandigen Behälter **1** über ein doppelwandiges Rohr, kann weiterlaufen. Die Förderung des Kraftstoffes wird nicht durch das Eindringen von Grundwasser in den Überwachungsraum **6** des doppelwandige Behälters oder des doppelwandigen Rohres beeinträchtigt. Also kann die Kraftstoffförderpumpe, vorzugsweise eine Tauchpumpe weiterlaufen und Kraftstoff fördern, bis in angemessener Zeit die Reparatur durchgeführt wird. Die Anlage kann allerdings weiterlaufen bis sie für die anstehende Reparatur angehalten werden muß.
b) Wird durch die erfindungsgemäße Vorrichtung zur Kontrolle von Überwachungsräumen **9** mit Hilfe des Mediensensors **13** der kapazitive Wert des Kraftstoffes gemessen, ist es sicher, dass die innere Behälterwand **2** das Leck aufweist. Damit kann es auch zu einer möglichen Kontamination der Umwelt durch freiwerdendes Lagergut kommen. In diesem Fall kann auch die Pumpleistung erhöht werden bis die Signalverarbeitungseinheit einen Steuerbefehl zum Stop der Vakuumquelle erzeugt und einen Steuerbefehl für die Alarmvorrichtung der den Alarm "PRODUKTLECK" auslöst, sowie einen Steuerbefehl zur Ansteuerung der externen ansteuerbaren Vorrichtung, also auch der Förderpumpe. In einem doppelwandigen Rohr kann es allerdings bei einem Produktleck und bei Verwendung von Druckpumpen zu einem schnellen Druckanstieg im Überwachungsraum **6** kommen. In diesem Fall wird zum Schutz der Umwelt ein Steuerbefehl an alle ansteuerbaren Bauteile des Systems oder auch der gesamten Anlage gegeben, um diese abzuschalten, nämlich unter anderem durch folgende Maßnahmen: Abschaltung der Druckpumpen zur Förderung des Mediums in den doppelwandigen überwachten Rohren, Abschalten der Vakuumquelle, Schließen des Magnetventils. Dies soll ohne Schädigung der Anlage erfolgen.

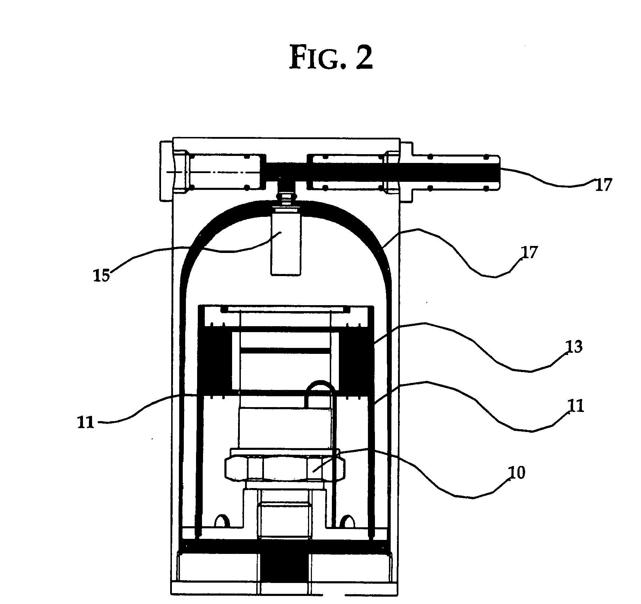

Fig. **2** zeigt den prinzipiellen Aufbau der Vorrichtung zur Kontrolle von Überwachungsräumen **9** von doppelwandigen Behältern **1** oder doppelwandigen Rohrleitungen 7 oder doppelwandigen Behältnissen. In dieser Figur ist der Drucksensor **10** klar zu erkennen. Durch seinen unmittelbaren Kontakt über Verbindungsmittel mit dem Überwachungsraum **6,** misst er die gleichen Druckwerte für das Medium **17,** wie diejenigen, die im Überwachungsraum **6** vorliegen. Um den Drucksensor **10** herum, befinden sich die zylinderförmig ausgestalteten Elektroden **11** des Mediensensors **13.** Oberhalb des Drucksensors **10** sitzt in diesem Fall der Optokoppler **14,** der für den Signal-Ausgang und den Signal-Empfang sorgt. Zur besseren Sicherung gegenüber möglichen Explosionen und Detonationen wird der gesamte Innenraum der Sensoreinheit mit Vergußmasse, beispielsweise WEVO PU 403 FL mit Härter 300 RE oder MEWA ME-ISO PUR K 760 ausgegossen. Des weiteren ist auch ein Magnetventil **15**, welche den Zu- bzw. Abfluss des Mediums **17** zu oder von dem Überwachungsraum **6** steuert.

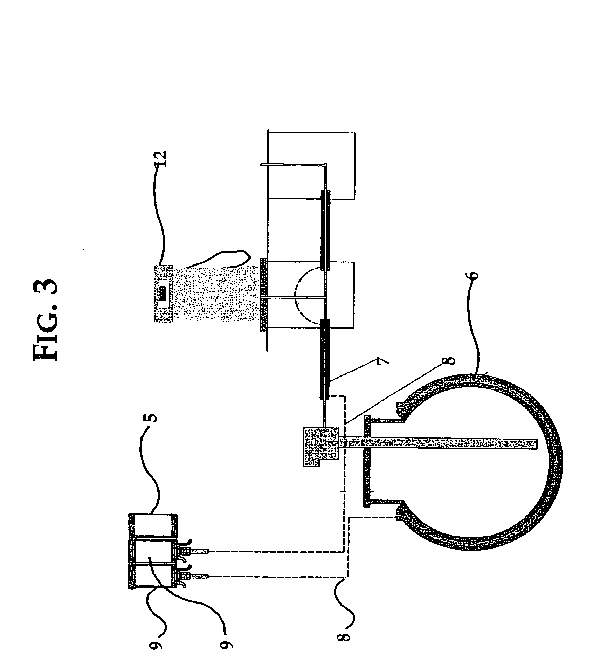

Fig. **3** zeigt eine schematische Darstellung des erfindungsgemäßen Systems in Anlagen zur Verwendung von Aufnahme, Lagerung und Abgabe von Kraftstoffen.

In dieser Figur sind deutlich die Vorrichtungen zur Kontrolle von Überwachungsräumen **9** zu sehen. Die Pumpe **5** erzeugt den Unterdruck in dem Überwachungsraum **6** des doppelwandigen Behälters **1** und in dem Überwachungsraum der doppelwandigen Rohrleitung **7.** Die Rohrverbindung 8 ist als pneumatisches Verbindungsmittel ausgelegt. Die jeweiligen Überwachungsräume sind über die erfindungsgemäße Vorrichtung mit der Pumpe **5** verbunden. Der doppelwandige Behälter **1** ist über mindestens eine doppelwandige Rohrleitung **7** mit mindestens einer Zapfsäule **12** verbunden.

## Patentansprüche

1. System zur Kontrolle von Überwachungsräumen **(6)** von doppelwandigen Behältern **(1)** oder doppelwandigen Rohren **(7)** oder doppelwandigen Behältnissen, aufweisend mindestens
einen doppelwandigen Behälter **(1)** und/oder mindestens ein doppelwandiges Rohr **(7)** und/oder mindestens ein doppelwandiges Behältnis, mindestens eine Vakuumquelle, die in dem/den Überwachungsraum/räumen **(6)** einen Unterdruck erzeugt,
eine Vorrichtung zur Kontrolle von Überwachungsräumen **(9)** von doppelwandigen Behältern **(1)** oder doppelwandigen Rohrleitungen **(7)** oder doppelwandigen Behältnissen mit mindestens einem Drucksensor **(10)** zur Messung des Überwachungsrauminnendrucks und einem Mediensensor **(13)** zur Detektion eines Mediums im Überwachungsinnenraum **(6),** wobei die Vorrichtung mit Hilfe des Mediensensors **(13)** eine Materialkonstante K des Mediums im Überwachungsinnenraum **(6)** bestimmt, sowie
mindestens eine Alarmvorrichtung, wobei
- die Vorrichtung zur Kontrolle von Überwachungsräumen **(9)** über ein Verbindungsmittel mit dem/den Überwachungsraum/räumen **(6)** des doppelwandigen Behälters **(1)** oder doppelwandigen Rohres (7) oder des doppelwandigen Behältnisses verbunden ist,
- die Vorrichtung zur Kontrolle von Überwachungsräumen **(9)** weiterhin mit mindestens einer Signalverarbeitungseinheit so verbunden ist, dass diese die von ihrem Drucksensor **(10)** und vom Mediensensor **13** erzeugten Signale empfangen und verarbeiten kann, wobei
- die Signalverarbeitungseinheit so eingerichtet ist, dass sie die Signale mit vorgegebenen Werten, insbesondere den Drucksignalwert mit einem Drucksollwert und den Materialkonstantensignalwert des Mediensensors **(13)** mit einem Materialkonstantensollwert vergleicht und daraus neue Steuerdaten und Steuerbefehle, insbesondere für die Vakuumquelle und die Alarmvorrichtung erzeugt,
indem die Signalverarbeitungseinheit
- für den Fall, dass das Drucksignal vom Drucksensor **(10)** höher als der Drucksollwert ist und die vom Mediensensor **(13)** gemessene Materialkonstante einem Materialkonstantensollwert entspricht, der demjenigen Materialkonstantenwert des Mediums **(17)** im Behälter oder Rohres oder Behältnisses gleicht,
einen Steuerbefehl für die Alarmvorrichtung erzeugt, der den Alarm "PRODUKTLECK" auslöst, sowie einen Steuerbefehl zur Ansteuerung externer Vorrichtungen, und/oder
- für den Fall, dass das Drucksignal vom Drucksensor **(10)** höher als der Drucksollwert ist und die vom Mediensensor **(13)** gemessene Materialkonstante einem Materialkonstantensollwert entspricht, der demjenigen Materialkonstantenwert einer wäßrigen Mischung gleicht,
einen Steuerbefehl für die Alarmvorrichtung erzeugt, der den Alarm "AUSSENLECK, FLÜSSIGKEIT" auslöst, und/oder
- für den Fall, dass das Drucksignal vom Drucksensor **(10)** höher als der Drucksollwert ist und die vom Mediensensor **(13)** gemessene Materialkonstante einem Materialkonstantensollwert entspricht, der weder demjenigen Materialkonstantenwert des Mediums **(17)** im Behälter oder Rohres oder Behältnisses noch dem einer wäßrigen Mischung gleicht,
einen Steuerbefehl für die Alarmvorrichtung erzeugt, der den Alarm "LUFTLECK" auslöst, und
- die Vakuumquelle und die Alarmvorrichtung jeweils so eingerichtet sind, dass sie die für sie bestimmten Steuerbefehle der Signalverarbeitungseinheit ausführen können.

2. System nach Anspruch 1, **dadurch gekennzeichnet, dass** als Verbindungsmittel zwischen dem Überwachungsraum **(6)** und der jeweiligen Vorrichtung zur Kontrolle von Überwachungsräumen **(9)** ein Schlauch und/oder ein Rohr dient.

3. System nach Anspruch 1 oder 2, **dadurch gekennzeichnet, dass** die Vakuumquelle eine Pumpe (5) ist.

4. System nach Anspruch 1 oder 2, **dadurch gekennzeichnet, dass** die Vakuumquelle ein Vakuum-Puffer-Gefäß ist.

5. System nach Anspruch 1 oder 2, **dadurch gekennzeichnet, dass** es zwei Vakuumquellen aufweist, wobei die eine Vakuumquelle ein Vakuum-Puffer-Gefäß und die andere Vakuumquelle eine Pumpe (5) ist.

6. System nach einem der Ansprüche 1 bis 5, **dadurch gekennzeichnet, dass** es ein Speicher- und Monitormodul aufweist, welches so eingerichtet ist, dass es mindestens die erzeugten Signalwerte des Drucksensors **(10)** und/oder des Mediensensors **(13)** und/oder den Drucksollwert und/oder den Materialkonstantensollwert und/oder die von der Signalverarbeitungseinheit erzeugten Steuerdaten jeweils über die Zeit speichert.

7. System nach Anspruch 6, **dadurch gekennzeichnet, dass** die über die Zeit gespeicherten Werte abgerufen und auf einer Ausgabeeinheit ausgegeben werden können.

8. System nach einem der Ansprüche 1 bis 7, **dadurch gekennzeichnet, dass** der Mediensensor **(13)** der Vorrichtung zur Kontrolle von Überwachungsräumen **(9)** von doppelwandigen Behältern **(1)** oder doppelwandigen Rohrleitungen (7) oder doppelwandigen Behältnissen mindestens zwei Elektroden **(11)** aufweist und die Vorrichtung zur Kontrolle von Überwachungsräumen **(9)** von doppelwandigen Behältern **(1)** oder doppelwandigen Rohrleitungen (7) oder doppelwandigen Behältnissen mit Hilfe des Mediensensors **(13)** eine elektrisch meßbare Materialkonstante K des Mediums **(17)** im Überwachungsinnenraum (6) bestimmt.

9. System nach Anspruch 8, **dadurch gekennzeichnet, dass** es sich bei der elektrischen Materialkonstante um die Dielektrizitätskonstante ε handelt.

10. System nach Anspruch 9, **dadurch gekennzeichnet, dass** die Dielektrizitätskonstante ε durch eine Kapazitätsmessung bestimmt wird.

11. System nach Anspruch 10, **dadurch gekennzeichnet, dass** die Kapazitätsmessung vermittels einer Brückenschaltung, vorzugsweise einer Wheatstone-Brücke oder einer Schering-Brücke erfolgt.

12. System nach Anspruch 10, **dadurch gekennzeichnet, dass** die Kapazitätsmessung vermittels einer Clapp-Oszillator Methode, vorzugsweise einer modifizierten Clapp-Oszillator Methode erfolgt.

13. System nach einem der Ansprüche 8 bis 12, **dadurch gekennzeichnet dass** die Vorrichtung zur Kontrolle von Überwachungsräumen **(9)** von doppelwandigen Behältern **(1)** oder doppelwandigen Rohrleitungen **(7)** oder doppelwandigen Behältnissen mindestens einen Optokoppler **(14)** aufweist, der der jeweiligen Potentialtrennung der Sensoren zu den übrigen elektrischen Bauteilen dient.

14. System nach Anspruch 13, **dadurch gekennzeichnet, dass** der Optokoppler **(14)** eigensicher ausgestaltet ist.

15. System nach einem der Ansprüche 8 bis 14, **dadurch gekennzeichnet dass** Drucksensor **(10)** und Mediensensor **(13)** in einer Baueinheit integriert sind.

16. System nach Anspruch 15, **dadurch gekennzeichnet, dass** die Baueinheit ein Gehäuse und mindestens ein Ventil **(15),** vorzugsweise ein Magnetventil, aufweist, wobei das Ventil **(15)** den Zu- bzw. Abfluss des Mediums **(17)** zu oder von dem Überwachungsraum **(6)** steuert.

17. System nach Ansprüche 15 oder 16, **dadurch gekennzeichnet dass** die elektrischen Bauteile der Baueinheit mit einer elektrisch nicht leitfähigen Vergußmasse umgeben sind.

18. System nach Ansprüche 15, 16 oder 17, **dadurch gekennzeichnet dass** die Baueinheit eine in etwa zylindrische Form aufweist.

19. Verwendung eines Systems nach einem der Ansprüche 1 bis 18 zur Kontrolle von Überwachungsräumen von doppelwandigen Behältern **(1)** oder Rohrleitungen (7) in Anlagen, welche zur Lagerung von Kraftstoffen dienen.

## Claims

1. System for checking of monitoring areas **(6)** of double-walled containers **(1)** or double-walled pipes **(7)** or double-walled vessels, having at least
one double-walled container (1) and/or at least one double-walled pipe **(7)** and/or at least one double-walled vessel, at least one vacuum source which produces a vacuum pressure in the monitoring area or areas **(6),**
an apparatus for checking of monitoring areas **(9)** of double-walled containers (1) or double-walled pipelines **(7)** or double-walled vessels by means of at least one pressure sensor **(10)** for measurement of the monitoring area internal pressure and by means of a media sensor **(13)** for detection of a medium in the monitoring internal area **(6),** wherein the apparatus determines a material constant K of the medium in the monitoring internal area **(6)** with the aid of the media sensor **(13),** as well as
at least one alarm apparatus, wherein
- the apparatus for checking of monitoring areas **(9)** is connected via a connection means to the monitoring area or areas **(6)** of the double-walled container **(1),** double-walled pipe **(7),** or double-walled vessel,
- the apparatus for checking of monitoring areas **(9)** is furthermore connected to at least one signal processing unit such that the latter can receive and process the signals produced by its pressure sensor **(10)** and by the media sensor **(13),** in which case
- the signal processing unit is designed such that it compares the signals with predetermined values, in particular the pressure signal value with a pressure nominal value and the material constant signal value of the media sensor **(13)** with a material constant nominal value, and uses this to produce new control data and control commands, in particular for the vacuum source and the alarm apparatus,
in that the signal processing unit
- in the situation in which the pressure signal from the pressure sensor **(10)** is higher than the pressure nominal value and the material constant measured by the media sensor **(13)** corresponds to a material constant nominal value which is equal to that material constant value of the medium **(17)** in the container, pipe or vessel,
produces a control command for the alarm apparatus, which initiates the alarm "PRODUCT LEAK", as well as a control command for operating external apparatuses, and/or
- in the situation in which the pressure signal from the pressure sensor **(10)** is higher than the pressure nominal value and the material constant measured by the media sensor **(13)** corresponds to a material constant nominal value which is equal to that material constant value of an aqueous mixture,
produces a control command for the alarm apparatus, which initiates the alarm "EXTERNAL LEAK, LIQUID", and/or
- in the situation in which the pressure signal from the pressure sensor **(10)** is higher than the pressure nominal value and the material constant measured by the media sensor **(13)** corresponds to a material constant nominal value which is not equal either to that material constant value of the medium **(17)** in the container, pipe or vessel, or to that of an aqueous mixture,
produces a control command for the alarm apparatus which initiates the alarm "AIR LEAK", and
- the vacuum source and the alarm apparatus are each designed such that they can carry out the control commands intended for them from the signal processing unit.

2. System according to Claim 1, **characterized in that** a hose and/or a pipe is used as the connection means between the monitoring area **(6)** and the respective apparatus for monitoring of monitoring areas **(9).**

3. System according to Claim 1 or 2, **characterized in that** the vacuum source is a pump **(5).**

4. System according to Claim 1 or 2, **characterized in that** the vacuum source is a vacuum-buffer vessel.

5. System according to Claim 1 or 2, **characterized in that** the system has two vacuum sources, in which case the first vacuum source is a vacuum-buffer vessel and the other vacuum source is a pump **(5).**

6. System according to one of Claims 1 to 5, **characterized in that** the system has a memory and monitor module which is designed such that it stores at least the signal values produced by the pressure sensor **(10)** and/or by the media sensor **(13)** and/or the pressure nominal value and/or the material constant nominal value and/or the control data produced by the signal processing unit, in each case over time.

7. System according to Claim 6, **characterized in that** the values stored over time can be called up and can be output on an output unit.

8. System according to one of Claims 1 to 7, **characterized in that** the media sensor **(13)** of the apparatus for monitoring of monitoring areas **(9)** of double-walled containers **(1),** double-walled pipelines **(7)** or double-walled vessels has at least two electrodes **(11),** and the apparatus for checking of monitoring areas **(9)** of double-walled containers **(1),** double-walled pipelines **(7)** or double-walled vessels uses the media sensor **(13)** to determine an electrically measurable material constant K of the medium **(17)** in the monitoring internal area **(6).**

9. System according to Claim 8, **characterized in that** the electrical material constant is the dielectric constant ε.

10. System according to Claim 9, **characterized in that** the dielectric constant ε is determined by a capacitance measurement.

11. System according to Claim 10, **characterized in that** the capacitance measurement is carried out by means of a bridge circuit, preferably a Wheatstone bridge or a Schering bridge.

12. System according to Claim 10, **characterized in that** the capacitance measurement is carried out by means of a Clapp oscillator method, preferably a modified Clapp-oscillator method.

13. System according to one of Claims 8 to 12, **characterized in that** the apparatus for checking monitoring areas **(9)** of double-walled containers **(1),** double-walled pipelines **(7)** or double-walled vessels has at least one optocoupler **(14)** which is used for potential isolation of each of the sensors from the other electrical components.

14. System according to Claim 13, **characterized in that** the optocoupler **(14)** is designed to be intrinsically safe.

15. System according to one of Claims 8 to 14, **characterized in that** the pressure sensor **(10)** and media sensor **(13)** are integrated in one unit.

16. System according to Claim 15, **characterized in that** the unit has a housing and at least one valve **(15),** preferably a solenoid valve, in which case the valve **(15)** controls the inlet and outlet flow of the medium **(17)** to or from the monitoring area **(6).**

17. System according to Claim 15 or 16, **characterized in that** the electrical components of the unit are surrounded by an electrically non-conductive encapsulating compound.

18. System according to Claim 15, 16 or 17, **characterized in that** the unit has an approximately cylindrical shape.

19. Use of a system according to one of Claims 1 to 18 for checking of monitoring areas of double-walled containers **(1)** or pipelines **(7)** in installations which are used for the storage of fuels.

## Revendications

1. Système de contrôle d'espaces de surveillance (6) de récipients (1) à double paroi, de tubes (7) à double paroi ou de réservoirs à double paroi, le système présentant
au moins un récipient (1) à double paroi, au moins un tube (7) à double paroi et/ou au moins un réservoir à double paroi et au moins une source de dépression qui forme une dépression dans le ou les espaces de surveillance (6),
un dispositif (9) de contrôle d'espaces de surveillance de récipients (1) à double paroi, de conduits tubulaires (7) à double paroi ou de réservoirs à double paroi, qui présente au moins un détecteur de pression (10) qui mesure la pression intérieure dans l'espace de surveillance et un détecteur de fluide (13) qui détecte le fluide présent dans l'espace intérieur de surveillance (6), le dispositif définissant à l'aide du détecteur de fluide (13) une constante matérielle K du fluide présent dans l'espace intérieur de surveillance (6), ainsi que
au moins un dispositif d'alarme,
le dispositif (9) de contrôle des espaces de surveillance étant raccordé par l'intermédiaire d'un moyen de liaison à l'espace ou aux espaces de surveillance (6) du récipient (1) à double paroi, du tube (7) à double paroi ou du réservoir à double paroi,
le dispositif (9) de contrôle des espaces de surveillance étant en outre relié à au moins une unité de traitement de signaux de telle sorte que cette dernière puisse recevoir et traiter les signaux produits par son détecteur de pression (10) et par le détecteur de fluide (13),
l'unité de traitement de signaux étant conçue pour comparer les signaux à des valeurs prédéterminées, en particulier la valeur du signal de pression, à une valeur de consigne de pression et la valeur du signal de constante matérielle du détecteur de fluide (13) à une valeur de consigne de constante matérielle et produit à partir de là de nouvelles données de commande et de nouveaux ordres de commande, en particulier pour la source de dépression et le dispositif d'alarme,
par le fait que l'unité de traitement de signaux :
au cas où le signal de pression provenant du détecteur de pression (10) est supérieur à la valeur de consigne de pression et la constante matérielle mesurée par le détecteur de fluide (13) correspond à une valeur de consigne de la constante matérielle qui est identique à la valeur de la constante matérielle du fluide (17) présent dans le récipient, le tube ou le réservoir,
forme pour le dispositif d'alarme un ordre de commande qui déclenche l'alarme "FUITE DE PRODUIT" ainsi qu'un ordre de commande qui commande des dispositifs externes, et/ou
au cas où le signal de pression délivré par le détecteur de pression (10) est supérieur à la valeur de consigne de pression et où la constante matérielle mesurée par le détecteur de fluide (13) correspond à une valeur de consigne de la constante matérielle qui est identique à la valeur de la constante matérielle d'un mélange aqueux,
forme pour le dispositif d'alarme un ordre de commande qui déclenche l'alarme "FUITE EXTERIEURE, LIQUIDE", et/ou
au cas où le signal de pression délivré par le détecteur de pression (10) est supérieur à la valeur de pression de consigne et où la constante matérielle mesurée par le détecteur de fluide (13) correspond à une valeur de consigne de la constante matérielle qui n'est identique ni à la valeur de la constante matérielle du fluide (17) présent dans le récipient, le tube ou les réservoirs ni à un mélange aqueux,
délivre pour le dispositif d'alarme un ordre de commande qui déclenche l'alarme "FUITE D'AIR" et
la source de dépression et le dispositif d'alarme étant tous deux conçus de manière à pouvoir exécuter les ordres de commande définis délivrés par l'unité de traitement de signaux.

2. Système selon la revendication 1, **caractérisé en ce qu'**un tuyau flexible et/ou un tube sert de moyen de liaison entre l'espace de surveillance (6) et le dispositif (9) de contrôle des espaces de surveillance.

3. Système selon les revendications 1 ou 2, **caractérisé en ce que** la source de dépression est une pompe (5).

4. Système selon les revendications 1 ou 2, **caractérisé en ce que** la source de dépression est un récipient tampon de dépression.

5. Système selon les revendications 1 ou 2, **caractérisé en ce qu'**il présente deux sources de dépression, une source de dépression étant un réservoir tampon de dépression et l'autre source de pression une pompe (5).

6. Système selon l'une des revendications 1 à 5, **caractérisé en ce qu'**il présente un module de mémoire et de surveillance conçu de manière à conserver au cours du temps au moins les valeurs des signaux délivrés par le détecteur de pression (10), le détecteur de fluide (13), la valeur de consigne de pression, la valeur de consigne de la constante matérielle et/ou les données de commande délivrées par l'unité de traitement de signaux.

7. Système selon la revendication 6, **caractérisé en ce que** les valeurs conservées au cours du temps peuvent être appelées et affichées sur une unité d'affichage.

8. Système selon l'une des revendications 1 à 7, **caractérisé en ce que** le détecteur de fluide (13) du dispositif (9) de contrôle des espaces de surveillance de récipients (1) à double paroi, de conduits tubulaires (7) à double paroi ou de réservoirs à double paroi présente au moins deux électrodes (11) et **en ce que** le dispositif (9) de contrôle des espaces de surveillance de récipients (1) à double paroi, de conduits tubulaires (7) à double paroi ou de réservoirs à double paroi définit à l'aide du détecteur de fluide (13) une constante matérielle K, mesurable électriquement, du fluide (17) présent dans l'espace intérieur de surveillance (6).

9. Système selon la revendication 8, **caractérisé en ce que** la constante matérielle électrique est la constante diélectrique.

10. Système selon la revendication 9, **caractérisé en ce que** la constante diélectrique ε est déterminée par la mesure d'une capacité.

11. Système selon la revendication 10, **caractérisé en ce que** la mesure de capacité s'effectue à l'aide d'un circuit de pont, de préférence un pont de Wheatstone ou un pont de Schering.

12. Système selon la revendication 10, **caractérisé en ce que** la mesure de capacité s'effectue au moyen d'une méthode à oscillateur de Clapp, de préférence une méthode modifiée à oscillateur de Clapp.

13. Système selon l'une des revendications 8 à 12, **caractérisé en ce que** le dispositif (9) de contrôle des espaces de surveillance de récipients (1) à double paroi, de conduits tubulaires (7) à double paroi ou de réservoirs à double paroi présente au moins un optocoupleur (14) qui sert à la séparation du potentiel des détecteurs vis-à-vis des autres composants électriques.

14. Système selon la revendication 13, **caractérisé en ce que** l'optocoupleur (14) est configuré de manière à présenter une sécurité intrinsèque.

15. Système selon l'une des revendications 8 à 14, **caractérisé en ce que** le détecteur de pression (10) et le détecteur de fluide (13) sont intégrés en une entité.

16. Système selon la revendication 15, **caractérisé en ce que** l'entité présente un boîtier et au moins une soupape (15), de préférence une soupape magnétique, la soupape (15) commandant l'amenée ou la sortie du fluide (17) par rapport à l'espace de surveillance (6).

17. Système selon les revendications 15 ou 16, **caractérisé en ce que** les composants électriques de l'entité sont entourés par une pâte de scellement électriquement non conductrice.

18. Système selon les revendications 15, 16 ou 17, **caractérisé en ce que** l'entité présente une forme sensiblement cylindrique.

19. Utilisation d'un système selon l'une des revendications 1 à 18 pour le contrôle d'espaces de surveillance de récipients (1) à double paroi ou de conduits tubulaires (7) dans des installations qui servent à entreposer des carburants.
